# EUROPÄISCHE PATENTSCHRIFT

(11) **EP 2 322 306 B1**
(45) Veröffentlichungstag und Bekanntmachung des Hinweises auf die Patenterteilung: **18.12.2013**
(21) Anmeldenummer: 09174728.7
(22) Anmeldetag: 02.11.2009
(51) Int. Cl.: B23K 9/00, B23K 9/173, B23K 25/00

(54) **Verfahren und Vorrichtung zum Herstellen einer Auflage auf einem Bauteil**
Method and device for manufacturing a support on a component
Procédé et dispositif de fabrication d'un recouvrement sur un composant

(43) Veröffentlichungstag der Anmeldung: 18.05.2011
(73) Patentinhaber: Eipa Eisen Palmen GmbH, 52070 Aachen (DE)
(72) Erfinder: Hermann, Hans-Werner, 35614 Asslar (DE); Mbaya, Zakaria, 52072 Aachen (DE)
(74) Vertreter: Bauer, Dirk

(56) Entgegenhaltungen:
- EP-A1- 0 062 124
- US-A- 4 806 735
- US-A1- 2005 199 593
- US-A1- 2008 190 900

## Beschreibung

Die Erfindung betrifft einerseits ein Verfahren zum Herstellen einer Auflage auf einem Bauteil, wobei eine metallische Matrix der Auflage ausgehend von einem stromführenden Hauptdraht als Elektrode mittels eines Schweißlichtbogens in ein Schweißbad auf das als Pol mit der Elektrode entgegengesetzter Polarität stromführende Bauteil aufgebracht wird, wobei dem Schweißlichtbogen ein stromführender Zusatzdraht zugeführt wird, der Schweißlichtbogen den Zusatzdraht und das Bauteil anschmilzt und dieses sich oberflächlich beim Erstarren mit der Auflage stoffschlüssig verbindet und andererseits eine Vorrichtung zum Herstellen einer Auflage auf einem Bauteil mit einer Stromquelle und einem Schweißkopf, durch den ein stromführender Hauptdraht als Elektrode der Stromquelle zu einer Oberfläche des als Pol mit der Elektrode entgegengesetzter Polarität stromführenden Bauteils der Stromquelle führbar ist, wobei ein stromführender Zusatzdraht in einen zwischen dem Hauptdraht und dem Bauteil ausgebildeten Schweißlichtbogen führbar ist, nach Ansprüchen 1 und 9.

Verfahren und Vorrichtungen der vorgenannten Art sind als Zweidraht- oder Tamdemverfahren und -vorrichtungen allgemein bekannt. Im Vergleich zu klassischen Schweißlichtbogen-Schweißverfahren mit einem Schweißstab oder -draht werden mit zwei gleichzeitig abbrennenden Elektroden signifikant erhöhte Arbeitsgeschwindigkeiten erzielt.

Die höhere Arbeitsleistung der bekannten Verfahren resultiert primär aus der kumulierten elektrischen Leistung und dem kumulierten Abbrand der zwei Drähte, führt aber auch zu einem deutlich erhöhten Energieeintrag in das Material des Bauteils und damit zu einem tieferen Einbrand des Schweißlichtbogens in das Bauteil und zu einer stärkeren Vermischung des Materials der Drähte und des Bauteils in der Matrix der Auflage.

Weiterhin sind ein Verfahren und eine Vorrichtung der vorgenannten Art beispielsweise aus dem Lehrbuch "Fügetechnik Schweißtechnik", 7. Auflage 2007, DVS Media GmbH/Düsseldorf zum Herstellen einer Auflage auf einem Bauteil mittels Plasma-Heißdrahtschweißen bekannt. Hierbei wird der Zusatzdraht über eine separate Energiequelle neben der Schweißstromquelle konduktiv vorgewärmt um den Abbrand zu fördern, führt aber dem Schweißlichtbogen keine zusätzliche elektrische Energie zu.

Im weiteren Umfeld der Erfindung sind zum Herstellen einer Auflage auf einem Bauteil Verfahren und Vorrichtungen zum Schweißlichtbogenspritzen allgemein bekannt, wobei der Schweißlichtbogen zwischen dem Hauptdraht und dem Zusatzdraht als Pol mit der Elektrode entgegengesetzter Polarität aufgebaut wird und beide Drähte abschmilzt und wobei die schmelzflüssige Matrix der Auflage mittels eines Zerstäubergases - beispielsweise mittels Druckluft - auf das Bauteil geschleudert wird und dort anhaftet.

Weitere ähnliche Verfahren sind von US2008/0190900 und US 4806735 bekannt.

### Aufgabe

Der Erfindung liegt die Aufgabe zugrunde, ein Schweißverfahren mit hoher Arbeitsleistung und geringem Einbrand zu schaffen.

### Lösung

Ausgehend von den bekannten Verfahren wird nach der Erfindung vorgeschlagen, dass der Zusatzdraht mit dem Bauteil elektrisch leitend verbunden ist. Wie bei den bekannten Verfahren wird erfmdungsgemäß der Zusatzdraht durch den Schweißlichtbogen zwischen Hauptdraht und Bauteil abgeschmolzen. Während der Zusatzdraht in den bekannten Verfahren die Polarität der Elektrode aufweist und in den Lichtbogen zusätzliche Energie einträgt, weist er nach der Erfindung die Polarität des Bauteils auf und entzieht dem Schweißlichtbogen vor dem Auftreffen auf das Bauteil Energie. Durch den geringeren Energieeintrag aus dem Schweißlichtbogen in das Bauteil wird der Einbrand und die Vermischung des Materials der Drähte und des Bauteils in der Matrix der Auflage entsprechend vermindert: In einer nach einem erfindungsgemäßen Verfahren hergestellten Auflage beträgt der Verlust an Legierungselementen gegenüber dem Material der Drähte typischer Weise etwa 5 vH gegenüber etwa 25 vH in einer nach den bekannten Verfahren hergestellten Auflage.

In einem erfindungsgemäßen Verfahren kann die Elektrode als Kathode und das Bauteil mit dem Zusatzdraht als Anode oder alternativ die Elektrode als Anode und das Bauteil mit dem Zusatzdraht als Kathode der Schweißstromquelle beschaltet sein.

Vorzugsweise ist in einem erfindungsgemäßen Verfahren der Hauptdraht ein Fülldraht. So können auf besonders einfache Weise der Matrix zusätzliche Legierungselemente und dem Schweißlichtbogen Flussmittel und andere Zusätze zugeführt werden.

Weiterhin ist vorzugsweise in einem erfindungsgemäßen Verfahren der Zusatzdraht ein Fülldraht. Insbesondere kann für den Hauptdraht und den Zusatzdraht derselbe Fülldraht zum Einsatz kommen. Unterschiedlicher Abbrand von Haupt- und Zusatzdraht verändert dann nicht die Zusammensetzung der Matrix.

Bevorzugt ist in einem erfindungsgemäßen Verfahren der Hauptdraht um einen Winkel zwischen 0 und 15, insbesondere zwischen 5 und 10 Winkelgrad gegenüber einem Lot auf das Bauteil angestellt. In einer vorteilhaften Ausprägung eines erfindungsgemäßen Verfahrens ist der Hauptdraht in Nahtrichtung schleppend angestellt. Alternativ kann der Hauptdraht auch stechend angestellt sein. Besonders bevorzugt ist der Zusatzdraht um einen Winkel zwischen 40 und 60, insbesondere rund 50 Winkelgrad gegenüber dem Hauptdraht angestellt. In dieser geometrischen Anordnung wurden in Versuchen besonders gute Ergebnisse mit erfindungsgemäßen Verfahren erzielt.

In einer besonders vorteilhaften Ausprägung eines erfindungsgemäßen Verfahrens wird ein Anteil von mindestens 40, insbesondere mindestens 60, weiterhin insbesondere mindestens 80 vH einer Stromstärke im Hauptdraht in dem Zusatzdraht abgeführt. So wird der Einbrand auf ein Minimum reduziert, ohne die stoffschlüssige Verbindung der Auflage mit dem Bauteil zu beeinträchtigen.

Dieser Anteil der Stromstärke im Zusatzdraht und damit auch der Einbrand in das Bauteil wird bevorzugt über eine Vorschubgeschwindigkeit des Zusatzdrahts geregelt. Über die Vorschubgeschwindigkeit in die zentrale heiße Zone des Schweißlichtbogens in Verbindung mit der Abbrandrate des Zusatzdrahts stellt sich eine dynamische Gleichgewichtsposition der Spitze des Zusatzdrahts ein. Deren Abstand von der Spitze des Hauptdrahts bestimmt den vom Schweißlichtbogen zwischen den beiden Spitzen zu überwindenden elektrischen Widerstand. Alternativ - oder ergänzend - kann zwischen Zusatzdraht und Stromquelle oder zwischen Bauteil und Stromquelle ein elektrischer Widerstand geschaltet sein, über den die in Zusatzdraht und Bauteil abgeleiteten Stromanteile geregelt werden.

Ausgehend von den bekannten Vorrichtungen wird nach der Erfindung vorgeschlagen, dass der Zusatzdraht der Stromquelle mit dem Bauteil elektrisch leitend verbunden ist. Eine solche erfindungsgemäße Vorrichtung ermöglicht die Ausführung eines vorstehend beschriebenen erfindungsgemäßen Verfahrens und zeichnet sich durch die dort genannten Vorteile aus.

Vorzugsweise weist eine erfindungsgemäße Vorrichtung einen Antrieb auf, mittels dessen der Zusatzdraht unabhängig von dem Hauptdraht in den Schweißlichtbogen führbar ist. Eine solche erfindungsgemäße Vorrichtung vereinfacht die Einstellung des Anteils der Stromstärke, die in dem Zusatzdraht aus dem Schweißlichtbogen abgeführt wird.

### Ausführungsbeispiel

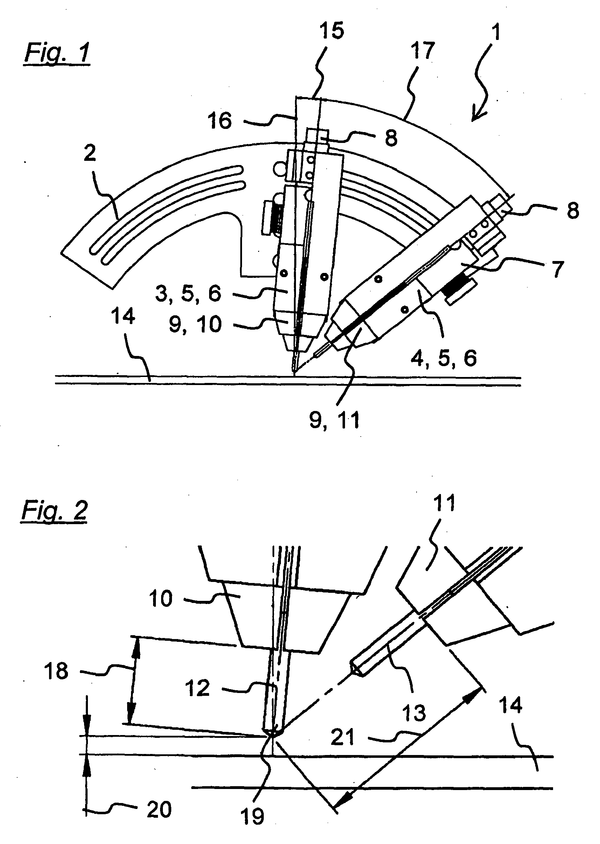

Die Erfmdung wird nachfolgend eines Ausführungsbeispiels erläutert. Es zeigen
- Fig. 1: einen Schweißkopf einer erfindungsgemäßen Vorrichtung und
- Fig. 2: ein Detail dieses Schweißkopfes.

Der Schweißkopf 1 einer nicht weiter dargestellten erfmdungsgemäßen Vorrichtung weist an einem senkrecht zur Bildebene verfahrbaren Arm eine Halterung 2 auf, an der zwei Brenner 3, 4 für die Führung von Schweißdrähten angebracht sind.

Die Brenner 3, 4 weisen jeweils eine in Ihrer Längsrichtung zweigeteilte Backe 5 auf, deren Teile 6 jeweils über nicht dargestellte getrennte Kühlmittelzu- und -abläufe mit Kühlwasser beaufschlagt werden.

Am oberen Ende 7 weisen die Backen 5 jeweils eine Drahtzufuhr 8 auf und einen nicht dargestellten elektrischen Kontakt, der sie mit einer nicht dargestellten Stromquelle der Vorrichtung verbindet. Als Stromquelle kommt eine SHARC T-Gleichstromquelle der H.W. Hermann GmbH, Asslar zum Einsatz, die sich durch einen gebündelten Lichtbogen mit zur Lichtbogenachse zunehmender Energiedichte auszeichnet. Dieser Lichtbogen ermöglicht eine Prozessführung mit sehr gleichmäßigen Stromverhältnissen an Elektrode, Zusatzdraht und Bauteil und mit einem gut steuerbarem Einbrand. Als konstant steuerndes Element kann dem Zusatzdraht optional ein Ohm'scher Widerstand von 0,1 bis 0,2 Ω (entsprechend einem Spannungsabfall von 5 bis 10 V) vorgeschaltet werden.

Die Brenner 3, 4 weisen am unteren Ende 9 der Backe 5 jeweils eine Stromdüse 10, 11 auf. Durch die Stromdüse 10 des ersten Brenners 3 wird der Hauptdraht 12, durch die Stromdüse 11 des zweiten Brenners 4 der Zusatzdraht 13 zur Oberfläche des zu schweißenden Bauteils 14 - hier: einer Platte - geführt.

Der Hauptdraht 12 ist als Anode, der Zusatzdraht 13 und das Bauteil 14 sind als Kathode der Stromquelle beschaltet.

In dem hier gezeigten Versuchsaufbau wird der Hauptdraht 12 mit einem Winkel 15 von 5° zu einem Lot 16 auf die Oberfläche "schleppend" - also dem Schweißbad voranlaufend - angestellt. Der Zusatzdraht 13 ist gegenüber dem Lot 16 um einen Winkel 17 von weiteren 45° angestellt. Zum Auftragsschweißen beispielsweise auf der Innenfläche eines Rohres kann der Schweißkopf 1 an dem Arm kontinuierlich um 360° in der Bildebene verschwenkt werden.

Die Stromdüse 10 für den Hauptdraht 12 weist einen Abstand 18 von 17 mm, das freie Ende 19 des Hauptdrahts 12 einen Abstand 20 von 3 mm von dem Bauteil 14 und die Stromdüse 11 des Zusatzdrahts 13 einen Abstand 21 von 30 mm von dem freien Ende 19 des Hauptdrahts 12 auf. Im nicht dargestellten Betriebzustand der erfindungsgemäßen Vorrichtung wird der Vorschub des Zusatzdrahts 13 derart gewählt, dass seine Spitze senkrecht unter dem freien Ende 19 des Hauptdrahts 12 liegt.

In den Figuren sind
- 1: Schweißkopf
- 2: Halterung
- 3: Brenner
- 4: Brenner
- 5: Backe
- 6: Teil
- 7: oberes Ende
- 8: Drahtzufuhr
- 9: unteres Ende
- 10: Stromdüse
- 11: Stromdüse
- 12: Hauptdraht
- 13: Zusatzdraht
- 14: Bauteil
- 15: Winkel
- 16: Lot
- 17: Winkel
- 18: Abstand
- 19: Ende
- 20: Abstand
- 21: Abstand

## Patentansprüche

1. Verfahren zum Herstellen einer Auflage auf einem Bauteil (14), wobei eine metallische Matrix der Auflage ausgehend von einem stromführenden Hauptdraht (12) als Elektrode mittels eines Schweißlichtbogens in ein Schweißbad auf das als Pol mit der Elektrode entgegengesetzter Polarität stromführende Bauteil (14) aufgebracht wird, wobei dem Schweißlichtbogen ein stromführender Zusatzdraht (13) zugeführt wird, der Schweißlichtbogen den Zusatzdraht (13) und das Bauteil (14) anschmilzt und dieses sich oberflächlich beim Erstarren mit der Auflage stoffschlüssig verbindet, ***dadurch gekennzeichnet, dass*** der Zusatzdraht (13) derart mit dem Bauteil (14) elektrisch leitend verbunden ist, dass er die Polarität des Bauteils (14) aufweist.

2. Verfahren nach dem vorgenannten Anspruch, ***dadurch gekennzeichnet, dass*** der Hauptdraht (12) ein Fülldraht ist.

3. Verfahren nach einem der vorgenannten Ansprüche, ***dadurch gekennzeichnet, dass*** der Zusatzdraht (13) ein Fülldraht ist.

4. Verfahren nach einem der vorgenannten Ansprüche, ***dadurch gekennzeichnet, dass*** der Hauptdraht (12) um einen Winkel (15) zwischen 0 und 14 Winkelgrad gegenüber einem Lot (16) auf das Bauteil (14) angestellt ist.

5. Verfahren nach einem der vorgenannten Ansprüche, ***dadurch gekennzeichnet, dass*** der Hauptdraht (12) in Nahtrichtung schleppend angestellt ist.

6. Verfahren nach einem der vorgenannten Ansprüche, ***dadurch gekennzeichnet, dass*** der Zusatzdraht (13) um einen Winkel (17) zwischen 40 und 60 Winkelgrad gegenüber dem Hauptdraht (12) angestellt ist.

7. Verfahren nach einem der vorgenannten Ansprüche, ***dadurch gekennzeichnet, dass*** ein Anteil von mindestens 40 vH einer Strömstärke im Hauptdraht (12) in dem Zusatzdraht (13) abgeführt werden.

8. Verfahren nach dem vorgenannten Anspruch, ***dadurch gekennzeichnet, dass*** der Anteil über eine Vorschubgeschwindigkeit des Zusatzdrahts (13) geregelt wird.

9. Vorrichtung zum Herstellen einer Auflage auf einem Bauteil (14) mit einer Stromquelle und einem Schweißkopf (1), durch den ein stromführender Hauptdraht (12) als Elektrode der Stromquelle zu einer Oberfläche des als Pol mit der Elektrode entgegengesetzter Polarität stromführenden Bauteils (14) der Stromquelle führbar ist, wobei ein stromführender Zusatzdraht (13) in einen zwischen dem Hauptdraht (12) und dem Bauteil (14) ausgebildeten Schweißlichtbogen führbar ist, ***dadurch gekennzeichnet, dass*** der Zusatzdraht (13) der Stromquelle derart mit dem Bauteil (14) elektrisch leitend verbunden ist, dass er die Polarität des Bauteils (14) aufweist.

10. Vorrichtung nach dem vorgenannten Anspruch, ***gekennzeichnet durch*** einen Antrieb, mittels dessen der Zusatzdraht (13) unabhängig von dem Hauptdraht (12) in den Schweißlichtbogen führbar ist.

## Claims

1. A method for producing a supporting surface on a component (14), wherein a metallic matrix of the supporting surface is applied starting from a current-carrying main wire (12) as electrode by means of a welding arc into a weld pool onto the component (14) carrying current as a pole with the opposite polarity to the electrode, wherein a current-carrying additional wire (13) is fed to the welding arc, the welding arc fuses the additional wire (13) and the component (14) and the same is superficially connected to the supporting surface in a materially-connected manner upon setting, **characterised in that** the additional wire (13) is electrically conductively connected to the component (14) in such a manner that it has the polarity of the component (14).

2. The method according to the preceding claim, **characterised in that** the main wire (12) is a cored wire.

3. The method according to one of the preceding claims, **characterised in that** the additional wire (13) is a cored wire.

4. The method according to one of the preceding claims, **characterised in that** the main wire (12) is positioned onto the component (14) at an angle (15) between 0 and 14 angular degrees with respect to a solder (16).

5. The method according to one of the preceding claims, **characterised in that** the main wire (12) is positioned in a dragging manner in the seam direction.

6. The method according to one of the preceding claims, **characterised in that** the additional wire (13) is positioned at an angle (17) between 40 and 60 angular degrees with respect to the main wire (12).

7. The method according to one of the preceding claims, **characterised in that** a portion of at least 40 vH of a current intensity in the main wire (12) is discharged in the additional wire (13).

8. The method according to the preceding claim, **characterised in that** the portion is controlled by a feed rate of the additional wire (13).

9. A device for producing a supporting surface on a component (14), with a current source and a welding head (1), by means of which a current-carrying main wire (12) can be guided as electrode of the current source to a surface of the component (14) carrying current as a pole with the opposite polarity to the electrode, wherein a current-carrying additional wire (13) can be guided into a welding arc formed between the main wire (12) and the component (14), **characterised in that** the additional wire (13) of the current source is electrically conductively connected to the component (14) in such a manner that it has the polarity of the component (14).

10. The device according to the preceding claim, **characterised by** a drive, by means of which the additional wire (13) can be guided into the welding arc independently of the main wire (12).

## Revendications

1. Procédé pour la fabrication d'un recouvrement sur une pièce (14), une matrice métallique du recouvrement étant déposée en partant d'un fil principal conducteur de courant (12) en tant qu'électrode à l'aide d'un arc électrique de soudage dans un bain de fusion sur la pièce conductrice de courant (14) en tant que pôle avec l'électrode à polarité inverse, un fil supplémentaire (13) conducteur de courant étant amené vers l'arc électrique de soudage, l'arc électrique de soudage faisant fondre le fil supplémentaire (13) et la pièce (14) et celle-ci se combinant superficiellement par coopération de matières avec le recouvrement lors de la solidification, **caractérisé en ce que** le fil supplémentaire (13) est relié de façon électro-conductrice avec la pièce (14) de manière à ce qu'il présente la polarité de la pièce (14).

2. Procédé selon la revendication précédente, **caractérisé en ce que** le fil principal (12) est un fil fourré.

3. Procédé selon l'une des revendications précédentes, **caractérisé en ce que** le fil supplémentaire (13) est un fil fourré.

4. Procédé selon l'une des revendications précédentes, **caractérisé en ce que** le fil principal (12) est mis selon un angle (15) compris entre 0 et 14 degrés d'angle par rapport à un métal d'apport (16) sur la pièce (14).

5. Procédé selon l'une des revendications précédentes, **caractérisé en ce que** le fil principal (12) est mis de manière traînante dans le sens de la soudure.

6. Procédé selon l'une des revendications précédentes, **caractérisé en ce que** le fil supplémentaire (13) est mis selon un angle (17) compris entre 40 et 60 degrés d'angle par rapport au fil principal (12).

7. Procédé selon l'une des revendications précédentes, **caractérisé en ce qu'**une part d'au moins 40 vH d'une intensité de courant dans le fil principal (12) est transportée dans le fil supplémentaire (13).

8. Procédé selon la revendication précédente, **caractérisé en ce que** la part est réglée grâce à une vitesse d'avance du fil supplémentaire (13).

9. Dispositif pour la fabrication d'un recouvrement sur une pièce (14) avec une source de courant et une tête de soudage (1) à travers laquelle il est possible de faire passer un fil principal conducteur de courant (12) en tant qu'électrode de la source de courant vers une surface de la pièce conductrice de courant (14) en tant que pôle avec l'électrode à polarité inverse de la source de courant, moyennant quoi il est possible de faire passer un fil supplémentaire (13) conducteur de courant dans un arc électrique de soudage formé entre le fil principal (12) et la pièce (14), **caractérisé en ce que** le fil supplémentaire (13) de la source de courant est relié de façon électro-conductrice avec la pièce (14) de manière à ce qu'il présente la polarité de la pièce (14).

10. Dispositif selon la revendication précédente, **caractérisé par** un entraînement grâce auquel il est possible de faire passer le fil supplémentaire (13) dans l'arc électrique de soudage indépendamment du fil principal (12).
